# EUROPÄISCHE PATENTSCHRIFT

(11) **EP 4 238 899 B1**
(45) Veröffentlichungstag und Bekanntmachung des Hinweises auf die Patenterteilung: **25.09.2024**
(21) Anmeldenummer: 22159998.8
(22) Anmeldetag: 03.03.2022
(51) Int. Cl.: B65G 1/04, B65G 1/137

(54) **BLOCKLAGERANORDNUNG UND VERFAHREN ZUM BETREIBEN EINER BLOCKLAGERANORDNUNG**
BLOCK STORAGE ARRANGEMENT AND METHOD OF OPERATING A BLOCK STORAGE ARRANGEMENT
STOCKAGE PAR BLOCS ET PROCÉDÉ DE FONCTIONNEMENT D'UN STOCKAGE PAR BLOCS

(43) Veröffentlichungstag der Anmeldung: 06.09.2023
(73) Patentinhaber: Jungheinrich Aktiengesellschaft, 22047 Hamburg (DE)
(72) Erfinder: Becker, Michael, 63512 Hainburg (DE); Morawietz, Timm, 66636 Tholey-Überroth (DE); Cavelius, Jörg, 61118 Bad Vilbel (DE); Reising, Michael, 63073 Offenbach (DE)
(74) Vertreter: Keil & Schaafhausen Patentanwälte PartGmbB

(56) Entgegenhaltungen:
- EP-A1- 3 812 307
- WO-A1-2020/169287
- DE-A1- 102016 125 788
- DE-T5- 112019 006 910
- US-A1- 2016 104 880

## Beschreibung

Die vorliegende Erfindung betrifft eine Blocklageranordnung mit mehreren Behälterstapelräumen, einem unterhalb der Behälterstapelräume angeordneten Beschickungsraum, mindestens einem im Beschickungsraum verfahrbaren Beschickungsfahrzeug, mit dem Behälter von unten in einen Behälterstapelraum einlagerbar und von unten aus dem Behälterstapelraum entnehmbar sind und das eine elektrische Antriebsanordnung und eine elektrisch aufladbare Batterie aufweist, und mindestens eine Übergabestation.

Weiterhin betrifft die Erfindung ein Verfahren zum Betreiben einer Blocklageranordnung mit mehreren Behälterstapelräumen und einem unterhalb der Behälterstapelräume angeordneten Beschickungsraum, bei dem man Behälter mit Hilfe eines im Beschickungsraum bewegbaren Beschickungsfahrzeugs von unten in die Behälterstapelräume einlagert und nach unten aus den Behälterstapelräumen entnimmt, das Beschickungsfahrzeug elektrisch über eine im Beschickungsfahrzeug mitgeführte aufladbare Batterie antreibt und das Beschickungsfahrzeug in eine Übergabestation bewegt.

Eine derartige Blocklageranordnung und ein derartiges Verfahren sind beispielsweise aus DE 11 2019 006 910 T5 bekannt.

WO 2020/169287 A1 beschreibt eine Blocklageranordnung, bei der mehrere elektrisch angetriebene Beschickungsfahrzeuge vorgesehen sind, die Behälter in Schwerkraftrichtung von oben in Behälteraufnahmeräume einlagern können. Die Blocklageranordnung weist mindestens eine Ladestation für die Batterie des Beschickungsfahrzeugs auf.

In einer Blocklageranordnung werden Behälter in Form von Behälterstapeln gelagert. Die Behälter stehen dabei direkt aufeinander, so dass man eine große Behälterdichte innerhalb eines Stapels erreichen kann. Die einzelnen Behälterstapel können senkrecht zur Schwerkraftrichtung ebenfalls relativ dicht beieinander platziert werden, so dass man den zur Verfügung stehenden Raum gut ausnutzen kann, um eine möglichst große Anzahl von Behältern unterzubringen.

Um auf einen Gegenstand, der in einem Behälter angeordnet ist, zugreifen zu können, fährt das Beschickungsfahrzeug durch den Beschickungsraum bis zu einer Position unterhalb des Behälterstapelraums, in dem der betreffende Behälter angeordnet ist. Das Beschickungsfahrzeug kann dann den Behälter ententnehmen und in die Übergabestation transportieren. Die Übergabestation kann auf unterschiedliche Arten ausgebildet sein. In einer Ausführungsform kann eine Bedienungsperson in der Übergabestation auf das Innere des Behälters zugreifen, um beispielsweise den Gegenstand zu entnehmen oder um einen anderen Gegenstand in den Behälter einzulagern. In einer anderen Ausführungsform kann die Übergabestation auch dazu verwendet werden, den Behälter an eine Transport- oder Fördereinrichtung zu übergeben oder von der Transport- oder Fördereinrichtung wieder in die Blocklageranordnung einzulagern. Es ist auch möglich, dass das Beschickungsfahrzeug in der Übergabestation den Behälter an einen Zwischenförderer abgibt, der den Behälter dann an eine Position weiterbefördert, in der eine Bedienungsperson Zugriff auf das Innere des Behälters hat.

Wenn der gewünschte Behälter sich nicht an der untersten Position in dem Stapel befindet, muss das Beschickungsfahrzeug einen oder mehrere Umlagerungsvorgänge vornehmen, d.h. es muss solange Behälter aus dem jeweiligen Behälterstapelraum entnehmen und in einem oder mehreren anderen Behälterstapelräumen einlagern, bis der gewünschte Behälter sich an der untersten Position befindet und aus dem Behälterstapelraum entnommen werden kann.

In gleicher Weise kann das Beschickungsfahrzeug verwendet werden, um den Behälter wieder in einen Behälterstapelraum einzulagern.

Der Antrieb des Beschickungsfahrzeugs erfolgt elektrisch. Die für den Antrieb notwendige elektrische Energie wird von einer aufladbaren Batterie bereitgestellt. Das bedeutet, dass die Batterie des Beschickungsfahrzeugs von Zeit zu Zeit aufgeladen werden muss, wobei das Beschickungsfahrzeug in diesen Ladezeiten nicht zur Verfügung steht. Man muss daher entweder eine größere Anzahl von Beschickungsfahrzeugen bereitstellen, um eine hohe Verfügbarkeit der Blocklageranordnung sicherzustellen, oder die Produktivität der Blocklageranordnung wird vermindert, weil das Beschickungsfahrzeug in den Ladepausen nicht zur Verfügung steht.

Der Erfindung liegt die Aufgabe zugrunde, auf kostengünstige Weise eine hohe Produktivität der Blocklageranordnung zu ermöglichen.

Diese Aufgabe wird bei einer Blocklageranordnung der eingangs genannten Art dadurch gelöst, dass in der Übergabestation eine elektrische Ladeeinrichtung für die Batterie angeordnet ist.

Das Beschickungsfahrzeug kann also immer dann geladen werden, wenn es in die Übergabestation eingefahren ist. Wie oben erwähnt, kann die Übergabestation unterschiedliche Ausgestaltungen aufweisen. Allen Ausgestaltungen ist gemeinsam, dass das Beschickungsfahrzeug hier für eine gewisse Zeit an einer definierten Position verweilen muss, beispielsweise um einen Behälter dort abzugeben oder aufzunehmen oder um einen Behälter für eine Bedienungsperson bereitzuhalten, damit diese einen Gegenstand aus dem Behälter entnehmen oder einen Gegenstand in den Behälter einlagern kann. In dieser Zeit kann die Batterie durch die Ladeeinrichtung geladen werden. Da sich das Beschickungsfahrzeug üblicherweise nur für einen kurzen Zeitraum in der Übergabestation befindet, ist die in dieser Zeit übertragbare Menge an elektrischer Energie zwar begrenzt. Da sich das Beschickungsfahrzeug aber wiederholt in der Übergabestation auflädt, reicht diese begrenzte Menge aus, um einen fortlaufenden Betrieb des Beschickungsfahrzeugs zu ermöglichen. Es reicht dabei aus, wenn die zur Übertragung von elektrischer Energie auf das Beschickungsfahrzeug erforderlichen Elemente in der Übergabestation vorhanden sind. Die zur Bereitstellung der elektrischen Energie benötigten Elemente, beispielsweise ein Transformator oder eine Stromrichterschaltung, können auch an einer anderen Position angeordnet sein.

Vorzugsweise weist die Ladeeinrichtung eine stationäre Kontaktanordnung auf, mit der eine Fahrzeugkontaktanordnung beim Einfahren in die Übergabestation in Kontakt kommt. Das Beschickungsfahrzeug stellt also beim Einfahren in die Übergabestation automatisch den Kontakt mit der Ladeeinrichtung her. Ein Eingriff einer Bedienungsperson ist nicht erforderlich. Das Laden des Beschickungsfahrzeugs wird damit automatisiert. Das Laden kann bereits beginnen, wenn das Beschickungsfahrzeug in die Übergabestation einfährt, und endet, wenn das Beschickungsfahrzeug die Übergabestation verlässt. Das Laden ist also auch während einer Bewegung des Beschickungsfahrzeugs möglich. Hierzu kann die stationäre Kontaktanordnung eine gewisse Länge in Bewegungsrichtung des Beschickungsfahrzeugs beim Ein- und Ausfahren in die Übergabestation aufweisen, beispielsweise eine Länge von 1 m. Auch die Fahrzeugkontaktanordnung kann eine gewisse Länge aufweisen oder es können mehrere Kontakte in Bewegungsrichtung hintereinander vorgesehen sein, so dass ein Laden auch bei einer Fahrbewegung des Beschickungsfahrzeugs erfolgen kann.

Hierbei ist bevorzugt, dass mindestens eine der Kontaktanordnungen eine Druckkrafterzeugungseinrichtung aufweist, die in Richtung auf die andere Kontaktanordnung wirkt, wenn sich das Beschickungsfahrzeug in der Übergabestation befindet. Die stationäre Kontaktanordnung der Ladeeinrichtung und die Fahrzeugkontaktanordnung können dann, wenn sich das Beschickungsfahrzeug in der Übergabeeinrichtung befindet, also einfährt, anhält oder ausfährt, mit einer gewissen Kraft gegeneinander belastet werden, so dass sich ein guter elektrischer Kontakt zwischen diesen beiden Kontaktanordnungen ergibt. Damit wird ein ausreichend guter Stromfluss von der Ladeeinrichtung zur Batterie sichergestellt und zwar auch dann, wenn sich das Beschickungsfahrzeug gegenüber der stationären Kontaktanordnung bewegt. Die beiden Kontaktanordnungen können auch als "Schleifkontakte" bezeichnet werden.

Bevorzugterweise ist die Ladeeinrichtung auf einen Ladestrom mit einer Stromstärke von mindestens 80A ausgelegt, vorzugsweise im Bereich von 80-140A. Die Ladeeinrichtung kann die Batterie mit einer relativ hohen Stromstärke laden, so dass eine ausreichende Menge von elektrischer Energie in die Batterie übertragen werden kann.

Vorzugsweise ist die Ladeeinrichtung auf die Batterie abgestimmt und lädt die Batterie mit eine C-Rate von mindestens 10. Die C-Rate beschreibt hier das Verhältnis der Ladestromstärke zur Kapazität der Batterie. Wenn also die Batterie eine Kapazität von 8 Ampere Stunden (Ah) hat, bedeutet dies, dass der Ladestrom 80A beträgt. Die Batterie kann also mit einer sehr hohen Stromstärke geladen werden.

Vorzugsweise lädt die Ladeeinrichtung die Batterie mindestens mit einer Energiemenge, die das Beschickungsfahrzeug durchschnittlich in einem Arbeitszyklus zwischen zwei Aufenthalten in der Übergabestation verbraucht. Die in einem Arbeitszyklus gebrauchte Energiemenge lässt sich bei einer Blocklageranordnung mit ausreichender Genauigkeit durch Simulationen ermitteln. Sie hängt u.a. davon ab, welche Masse die Behälter durchschnittlich haben, die vom Beschickungsfahrzeug gehandhabt werden müssen. In Abhängigkeit von der Masse des Behälters, dem Weg, den das Beschickungsfahrzeug zurücklegen muss, und der Anzahl von Umlagervorgängen benötigt das Beschickungsfahrzeug wenige Wattstunden (Wh) für einen Arbeitszyklus, vielfach weniger als 10 Wh. Da man immer nur relativ kleine Energiemengen nachladen muss, reicht die Verweilzeit in der Übergabestation aus, um dem Beschickungsfahrzeug ausreichend Energie für seinen Betrieb zu übergeben.

Vorzugsweise weist das Beschickungsfahrzeug eine Hubeinrichtung auf, die mit einem elektrischen Antrieb in Wirkverbindung steht, wobei der elektrische Antrieb bei einer Absenkung der Hubeinrichtung als elektrischer Generator arbeitet und elektrische Energie in die Batterie einspeist. Bei der Entnahme eines Behälters aus einem Behälterstapelraum muss der Behälter, ggfs. mit weiteren darüber gestapelten Behältern, angehoben werden, bis eine Halteeinrichtung, die den Behälterstapel im Behälterstapelraum hält, freikommt und gelöst werden kann. Danach wird der Behälter mit den darauf befindlichen weiteren Behältern abgesenkt, bis der verbleibende Behälterstapel wieder von der Halteeinrichtung gehalten wird. Diese Absenkbewegung erfolgt über die Höhe des Behälters und darüber hinaus, also die Erstreckung des Behälters in Schwerkraftrichtung. Die dabei gewonnene Energie kann zum Aufladen der Batterie verwendet werden.

Vorzugsweise ist die Batterie eine Lithium-Titan-Oxid-Batterie. Eine derartige LTO-Batterie kann relativ schnell geladen werden, d.h. sie verträgt hohe Ladeströme, so dass in kurzer Zeit ausreichend elektrische Energie in die Batterie eingespeist werden kann. Die Verweilzeit in der Übergabestation reicht dann aus, um eine ausreichende Energieversorgung sicherzustellen.

Die Aufgabe wird bei einem Verfahren der eingangs genannten Art dadurch gelöst, dass man die Batterie lädt, während sich das Beschickungsfahrzeug in der Übergabestation befindet.

Man nutzt also die Zeit aus, in der sich das Beschickungsfahrzeug an einem definierten Ort aufhält, nämlich der Übergabestation. Wenn sich das Beschickungsfahrzeug in der Übergabestation befindet, verweilt es eine Zeit in Ruhe oder bewegt sich langsam relativ zur Ladeeinrichtung, so dass man in dieser Zeit die Batterie laden kann. Auch wenn diese Zeit nur kurz ist, kann man eine ausreichend große Menge an elektrischer Energie von der Ladeeinrichtung an die Batterie übertragen.

Vorzugsweise stellt das Beschickungsfahrzeug beim Einfahren in die Übergabestation einen Kontakt zwischen der Batterie und einer Ladeeinrichtung automatisch her. Ein händischer Eingriff von einer Bedienungsperson ist dann nicht erforderlich. Bereits beim Einfahren kann dann ggfs. eine Übertragung von elektrischer Energie von der Ladeeinrichtung auf die Batterie stattfinden. Auch beim Ausfahren ist ein Laden noch möglich, solange die Kontakte des Beschickungsfahrzeugs und die Kontakte der Ladeeinrichtung noch elektrischen Kontakt haben.

Vorzugsweise lädt man die Batterie mit einer C-Rate von mindestens 10. Wie oben erwähnt, ergibt sich damit ein Ladestrom, der zehnmal so hoch ist, wie die Kapazität der Batterie in A Stunden. Damit ergeben sich relativ hohe Ladeströme, die ausreichen, um die notwendige Menge an elektrischer Energie von der Ladeeinrichtung in die Batterie zu überführen.

Vorzugsweise führt man der Batterie beim Aufenthalt in der Übergabestation eine Energiemenge zu, die mindestens der Energiemenge entspricht, die das Beschickungsfahrzeug in einem durchschnittlichen Arbeitszyklus zwischen zwei Aufenthalten in der Übergabestation verbraucht. Diese Energiemenge kann man im Vorhinein durch Simulationen ermitteln. Sie hängt u.a. vom durchschnittlichen Gewicht der Behälter ab, die gehandhabt werden müssen. Auch die Erstreckung der Blocklageranordnung in einer Ebene senkrecht zur Schwerkraftrichtung wird hier einen Einfluss haben.

Vorzugsweise verwendet man ein Beschickungsfahrzeug mit einer Hubeinrichtung, die mit einem elektrischen Antrieb in Wirkverbindung steht, wobei man den elektrischen Antrieb beim Absenken der Hubeinrichtung generatorisch betreibt. Wenn der elektrische Antrieb generatorisch betrieben wird, dann wandelt er die potentielle Energie eines Behälters beim Absenken in elektrische Energie um, die in die Batterie eingespeist werden kann. Damit ergibt sich eine Energierückgewinnung, die mit Vorteil genutzt werden kann, um die Betriebszeit des Beschickungsfahrzeugs weitgehend unterbrechungsfrei zu gestalten.

Vorzugsweise verwendet man als Batterie eine Lithium-Titan- Oxid-Batterie. Eine derartige LTO-Batterie verträgt relativ große Ladeströme. Eine LTO-Batterie ist beispielsweise aus US 2016/0104880 A1 bekannt.

Die Erfindung wird im Folgenden anhand eines bevorzugten Ausführungsbeispiels in Verbindung mit der Zeichnung beschrieben. Hierin zeigen:
- Fig. 1: eine schematische Darstellung einer Blocklageranordnung,
- Fig. 2: eine schematische Draufsicht auf ein Beschickungsfahrzeug in einer Übergabestation,
- Fig. 3: eine schematische Vorderansicht des Beschickungsfahrzeugs in der Übergabestation,
- Fig. 4: eine schematische Ansicht einer zweiten Ausführungsform einer Blocklageranordnung,
- Fig. 5: eine schematische Ansicht einer Fahrzeugkontaktanordnung,
- Fig. 6: eine schematische Ansicht einer stationären Kontaktanordnung
- Fig. 7: eine schematische Ansicht einer dritten Ausführungsform einer Blocklageranordnung,
- Fig. 8: eine schematische Ansicht einer weiteren Ausführungsform einer Fahrzeugkontaktanordnung und
- Fig. 9: eine schematische Ansicht einer weiteren Ausführungsform einer stationären Kontaktanordnung.

Gleiche und einander entsprechende Elemente sind in allen Fig. mit den gleichen Bezugszeichen bezeichnet.

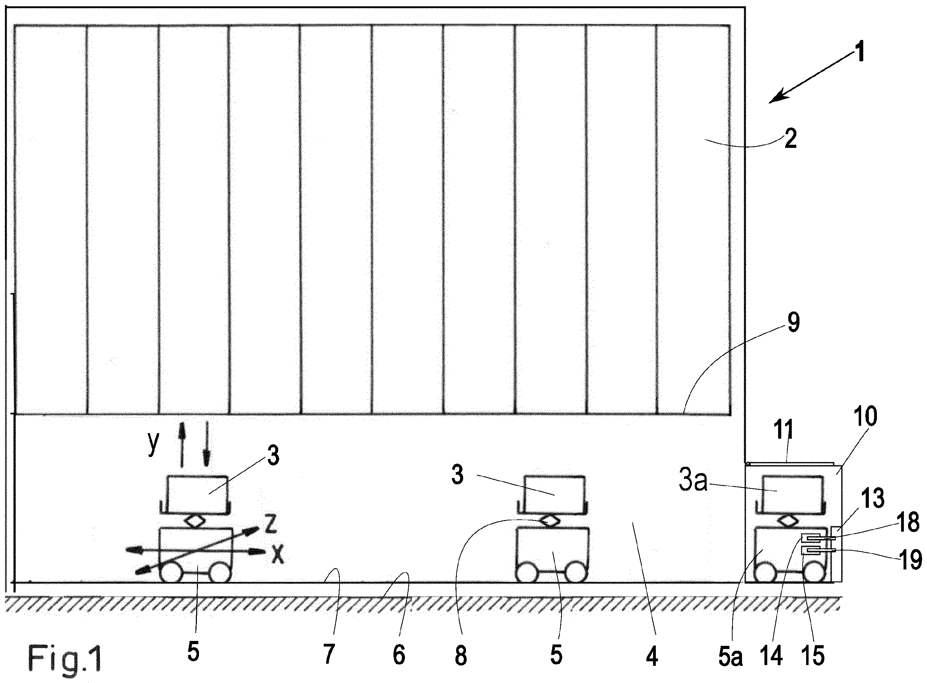

Fig. 1 zeigt stark schematisiert eine Blocklageranordnung 1 mit mehreren Behälterstapelräumen 2, die, wie in Fig. 1 zu erkennen ist, in einer Reihe in X-Richtung nebeneinander angeordnet sind. Mehrere Reihen von Behälterstapelräumen 2 können senkrecht dazu, also in Z-Richtung, hintereinander angeordnet sein. Die Behälterstapelräume 2 sind also matrixartig in Reihen und Spalten angeordnet. Jeder Behälterstapelraum 2 kann einen Stapel von Behältern 3 aufnehmen.

Unterhalb der Behälterstapelräume 2 ist ein Beschickungsraum 4 angeordnet. In dem Beschickungsraum 4 sind mehrere Beschickungsfahrzeuge 5 verfahrbar. Die Beschickungsfahrzeuge 5 können sowohl in X-Richtung als auch in Z-Richtung verfahren werden. Die Beschickungsfahrzeuge 5 können beispielsweise auf einem Fußboden 6 verfahren werden. Im vorliegenden Ausführungsbeispiel sind jedoch Schienen 7 vorgesehen, auf denen die Beschickungsfahrzeuge verfahren werden können. Zum Verfahren weist das Beschickungsfahrzeug einen nicht näher dargestellten elektrischen Fahrantrieb auf.

Die Beschickungsfahrzeuge 5 dienen dazu, einen Behälter 3 in einem Behälterstapelraum 2 einzulagern oder einen Behälter 3 aus einem Behälterstapelraum 2 zu entnehmen.

Zum Einlagern eines Behälters 3 in einem Beschickungsraum 2 wird das Beschickungsfahrzeug 4 unter den gewünschten Behälterstapelraum 2 verfahren. Der Behälter 3 wird durch eine elektrisch angetriebene Hubeinrichtung 8 des Beschickungsfahrzeugs in Y-Richtung, also in Schwerkraftrichtung, angehoben, bis er in den Behälterstapelraum 2 eintritt. Der Behälterstapelraum 2 ist vom Beschickungsraum 4 durch einen Rahmen 9 getrennt. In dem Rahmen 9 ist für jeden Behälterstapelraum 2 eine Öffnung vorgesehen, durch die ein Behälter 3 hindurchbewegt werden kann. Im Bereich der Öffnung ist eine nicht näher dargestellte Halteeinrichtung vorgesehen. Wenn der Behälter 3 an der Halteeinrichtung vorbeibewegt worden ist und danach wieder abgesenkt wird, wird er von der Halteeinrichtung gehalten. Wenn sich zuvor bereits ein oder mehrere Behälter in dem Behälterstapelraum 2 befunden haben, werden diese Behälter durch den neu einzulagernden Behälter 3 mit angehoben, so dass sich ein Stapel von Behältern im Behälterstapelraum 2 befindet.

Zum Entnehmen eines Behälters 3 aus einem Behälterstapelraum 2 wird wiederum das Beschickungsfahrzeug 5 verwendet. Das Beschickungsfahrzeug 5 wird unter dem Behälterstapelraum 2 positioniert, aus dem der Behälter entnommen werden soll. Die Hubeinrichtung 8 wird entgegen der Schwerkraftrichtung, also in Y-Richtung, nach oben bewegt und hebt den untersten Behälter eines Stapels an, bis er von der Halteeinrichtung freikommt. Die Halteeinrichtung wird dann offengehalten und der Behälter 3 kann dann mit Hilfe der Hubeinrichtung 8 abgesenkt werden.

In Schwerkraftrichtung seitlich neben dem Beschickungsraum 4 ist eine Übergabestation 10 angeordnet. Die Übergabestation 10 weist im vorliegenden Fall eine Klappe 11 auf, die geöffnet werden kann, um einer Bedienungsperson einen Zugriff auf einen Behälter 3a zu ermöglichen, der mit Hilfe eines Beschickungsfahrzeugs 5a in die Übergabestation 10 verfahren worden ist. Die Bedienungsperson muss die Klappe 11 lediglich öffnen und kann dann von oben in den Behälter 3a hineingreifen, um einen darin befindlichen Gegenstand zu entnehmen oder um einen Gegenstand in den Behälter 3a einzulagern.

Die Übergabestation 10 kann auch auf andere Weise ausgebildet sein. Es kann beispielsweise vorgesehen sein, dass in der Übergabestation 10 eine Übergabe des Behälters 3a auf einen Horizontalförderer oder von einem Horizontalförderer auf das Beschickungsfahrzeug 5a möglich ist. In einer weiteren Ausgestaltung kann die Übergabestation 10 so ausgebildet sein, dass das Beschickungsfahrzeug 5a den Behälter 3a an einen Zwischenförderer übergibt, der den Behälter 3a dann bis unter die Klappe 11 fördert, so dass das Beschickungsfahrzeug 5a nur kurz in der Übergabestation 10 verweilen muss, eine Bedienungsperson aber dennoch genügend Zeit hat, um Zugriff auf den Behälter 3a zu haben.

Die Beschickungsfahrzeuge 5, 5a weisen eine aufladbare Batterie 12, die auch als Akkumulator bezeichnet werden kann, auf. Die Batterie 12 liefert die elektrische Energie für den Fahrantrieb und die Hubeinrichtung 8. Dargestellt ist dies nur für das Beschickungsfahrzeug 5a. Die anderen Beschickungsfahrzeuge 5 sind genauso ausgebildet, wobei Einzelheiten aus Gründen der Übersicht nicht dargestellt sind.

In der Übergabestation 10 ist eine elektrische Ladeeinrichtung 13 für die Batterie 12 angeordnet. Wenn das Beschickungsfahrzeug 5a in die Übergabestation 10 einfährt, kommt es mit der Ladeeinrichtung 13 in einen elektrischen Kontakt, wie weiter unten erläutert werden wird. Damit ist es möglich, die Batterie 12 des Beschickungsfahrzeugs 5a aufzuladen, solange sich das Beschickungsfahrzeug 5a in der Übergabestation 10 befindet.

Die Ladeeinrichtung 13 ist dazu ausgelegt, das Beschickungsfahrzeug 5a mit einer relativ hohen Stromstärke zu laden. Im vorliegenden Fall beträgt die Ladestromstärke mindestens 80 Ampere, vorzugsweise liegt die Ladestromstärke im Bereich von 80 bis 140 Ampere.

Die Ladeeinrichtung 13 ist auf die Batterie 12 abgestimmt und lädt die Batterie 12 mit einer C-Rate von mindestens 10. Die C-Rate beschreibt hier das

Verhältnis der Ladestromstärke zur Kapazität der Batterie 12. Wenn also die Batterie 12 eine Kapazität von 8 Ampere Stunden (Ah) hat, bedeutet dies, dass der Ladestrom 80 Ampere beträgt. Die Batterie 12 kann also mit einer sehr hohen Stromstärke geladen werden.

Die Ladeeinrichtung 13 lädt die Batterie 12 in der Zeit, in der sich das Beschickungsfahrzeug 5a in der Übergabestation befindet, mindestens mit einer Energiemenge, die das Beschickungsfahrzeug durchschnittlich in einem Arbeitszyklus zwischen zwei Aufenthalten in der Übergabestation verbraucht. Diese Energiemenge reicht aus, um einen fortlaufenden Betrieb des Beschickungsfahrzeugs 5a zu ermöglichen. Es gibt zwar Arbeitszyklen, in denen das Beschickungsfahrzeug 5a mehr als die aktuell aufgenommene Energiemenge verbraucht. Andererseits gibt es auch Arbeitszyklen, in denen das Beschickungsfahrzeug 5a weniger als die aufgenommene Energiemenge verbraucht. Im Mittel wird dem Beschickungsfahrzeug 5a also eine ausreichende Energiemenge zugeführt.

Die Energiemenge, die das Beschickungsfahrzeug 5a durchschnittlich in einem Arbeitszyklus zwischen zwei Aufenthalten in der Übergabestation 10 verbraucht, lässt sich bei einer Blocklageranordnung 1 mit ausreichender Genauigkeit durch Simulation ermitteln. Das Beschickungsfahrzeug 5a verbraucht elektrische Energie im Wesentlichen auf zwei Arten: zum einen muss das Beschickungsfahrzeug 5a einen Behälter 3, 3a anheben und absenken. Zum anderen muss das Beschickungsfahrzeug 5a einen Behälter 3, 3a von einem Behälterstapelraum 2 in die Übergabestation 10 transportieren. Wenn der in die Übergabestation 10 zu transportierende Behälter 3a nicht der unterste Behälter eines Stapels ist, muss das Beschickungsfahrzeug 5 auch "Umstapelvorgänge" vornehmen, d.h. es muss den jeweils untersten Behälter eines Behälterstapels aus dem Behälterstapelraum 2 so lange entnehmen, bis der gewünschte Behälter in die unterste Position gelangt ist. Die entnommenen Behälter müssen dann in einem anderen Behälterstapelraum zwischengelagert werden.

Die zum Anheben eines Behälters 3, 3a benötigte Energie hängt auch von der Masse des Behälters ab. Vielfach liegt die in einem Arbeitszyklus verbrauchte elektrische Energie in der Größenordnung von deutlich weniger als 10 Wattstunden (Wh). Nur bei schwereren Behältern kann die Energiemenge in einem Arbeitszyklus auch mehr als 10 Wh betragen, in der Regel bleibt sie aber auch dann unter 20 Wh.

Wenn die Batterie 12 beispielsweise eine Entspannung von 60 Volt aufweist, dann entspricht dies bei einem Energieverbrauch von 10 Wh einem Verbrauch von 0,166 Ah. Wenn die Ladeeinrichtung 13 mit 80 Ampere lädt, dann wird dieser Energieverbrauch in weniger als acht Sekunden wieder ausgeglichen. Die Verweilzeit des Beschickungsfahrzeugs 5a in der Übergabestation 10, also die Zeit vom Beginn des Einfahrens bis zum Ende des Ausfahrens, ist in der Regel deutlich länger.

Die Hubeinrichtung 8 kann beim Absenken eines Behälters 3 auch generatorisch arbeiten, d.h. beim Absenken eines Behälters 3 wird die potentielle Energie des Behälters 3 in elektrische Energie umgewandelt, die dann wiederum die Batterie 12 des Beschickungsfahrzeugs 5a lädt.

Die Batterie 12 ist vorzugsweise eine Lithium-Titan-Oxid-Batterie (LTO-Batterie). Eine derartige LTO-Batterie kann relativ schnell geladen werden, also mit ausreichend hohen Ladeströmen, so dass nur kurze Zeiten benötigt werden, um eine ausreichende Energiemenge von der Ladeeinrichtung 13 in die Batterie 12 zu übertragen.

Das Beschickungsfahrzeug 5a weist mindestens zwei Kontaktflächen 14, 15 auf. Diese Kontaktflächen 14, 15 sind seitlich am Beschickungsfahrzeug 5a angeordnet, also parallel zu der Richtung, mit der das Beschickungsfahrzeug 5a in die Übergabestation 10 eingefahren wird. Die Kontaktflächen 14, 15 bilden eine Fahrzeugkontaktanordnung.

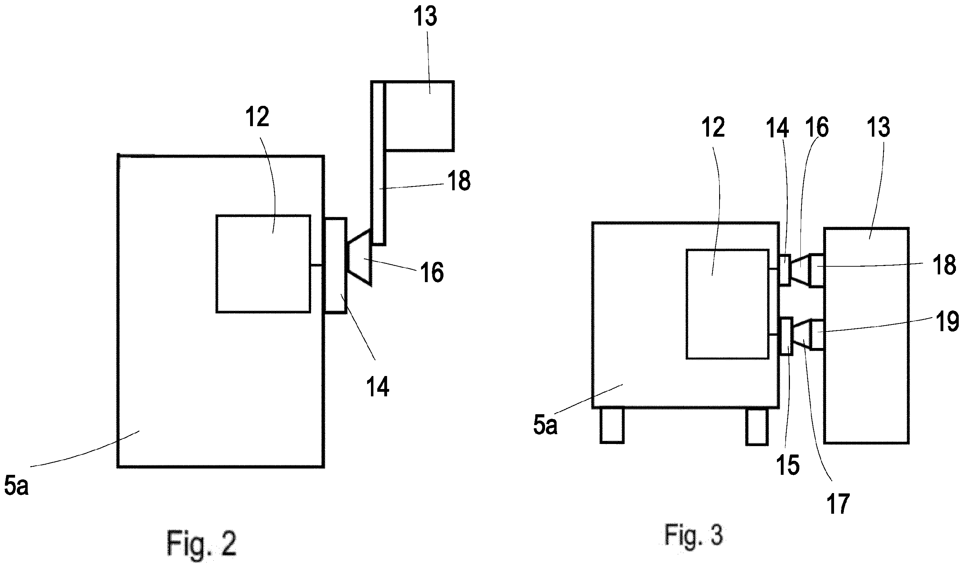

Die Ladeeinrichtung 13 weist eine stationäre Kontaktanordnung mit mindestens zwei Kontakten 16, 17 auf. Jeder Kontakt 16, 17 ist an einer Druckkrafterzeugungseinrichtung 18, 19 angeordnet, die im einfachsten Fall als Blattfeder ausgebildet sein kann. Die Druckkrafterzeugungseinrichtung 18, 19 sorgt dafür, dass die Kontakte 16, 17 der stationären Kontaktanordnung mit der Fahrzeugkontaktanordnung 14, 15 zuverlässig in Kontakt kommen, wenn das Beschickungsfahrzeug 5a in die Übergabestation 10 eingefahren wird. Wie man in den Fig. 2 und 3 erkennen kann, können die Kontakte 16, 17 der stationären Kontaktanordnung abgeschrägt sein, so dass sie beim Einfahren des Beschickungsfahrzeugs 3a in die Übergabestation 10 leicht gegen die Kraft der Druckkrafterzeugungseinrichtung 18, 19 bewegt werden können. Dadurch wird, wie beschrieben, ein ausreichender elektrischer Kontakt hergestellt, und zwar automatisch, ohne dass hierzu weitere Handhabungsschritte notwendig wären.

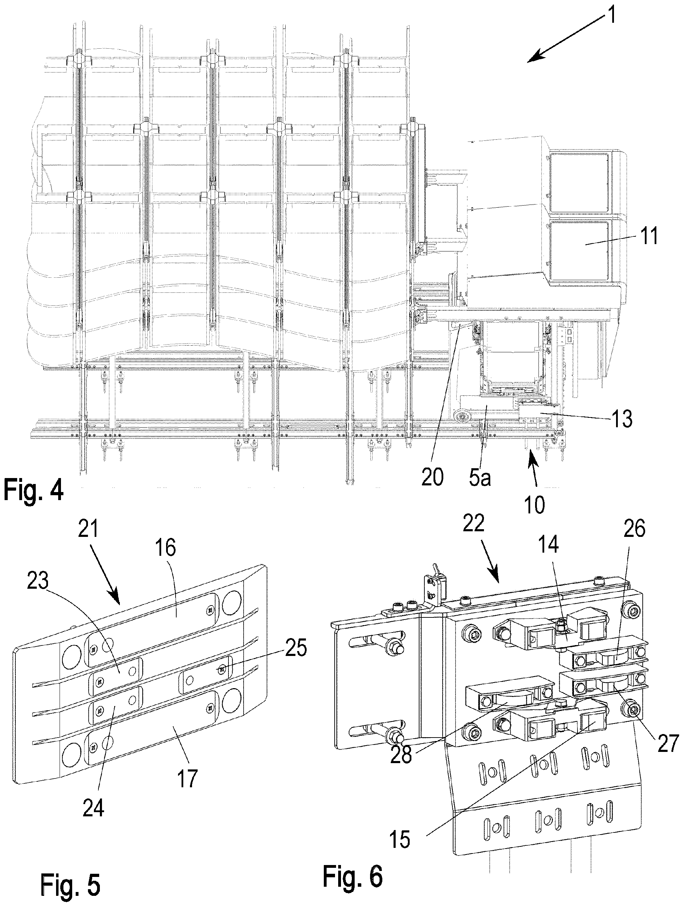

Fig. 4 zeigt eine zweite Ausführungsform einer Stapellageranordnung 1. Im Unterschied zu der Ausführungsform nach Fig. 1 fährt das Beschickungsfahrzeug 5a den Behälter 3a nicht mehr bis direkt unter die Klappe, sondern übergibt den Behälter 3a an einen Förderer 20, der den Behälter 3a vom Beschickungsfahrzeug 5a abnimmt und ihn bis unter die Klappe 11 fördert. Damit kann die Zeit, in der das Beschickungsfahrzeug 5a in der Übergabestation 10 verweilen muss, kurzgehalten werden. Der Förderer 20 kann den Behälter 3a sowohl in die Richtung fördern, in der das Beschickungsfahrzeug 5a in die Übergabestation 10 einfährt, als auch quer dazu, falls erforderlich. Die genaue Ausbildung des Förderers ist hier von untergeordneter Bedeutung.

Da nun weniger Zeit zur Verfügung steht, in der das Beschickungsfahrzeug 5a in der Übergabestation 10 steht, verwendet man für die stationären Kontakte 16, 17 der Ladeeinrichtung 13 eine Ladeleiste 21, die eine größere Länge von beispielsweise 1m aufweist. Entsprechend lang können auch die stationären Kontakte 16, 17 ausgebildet sein. Die Fahrzeugkontakte 14, 15 sind an einem Stromabnehmer 22 angeordnet. Damit ist es möglich, dass ein Ladevorgang bereits beginnt, wenn das Beschickungsfahrzeug 5a in die Übergabestation 10 einfährt, und erst dann endet, wenn das Beschickungsfahrzeug 5a die Übergabestation 10 verlässt. Eine Übertragung von elektrischer Energie von der Ladstation 13 auf das Beschickungsfahrzeug 5a ist in der Übergabestation 10 also auch bei einer Fahrbewegung des Beschickungsfahrzeugs 5a möglich. Die Zeit, die das Beschickungsfahrzeug 5a zum Einfahren in die und zum Ausfahren aus der Übergabestation benötigt, kann also ebenfalls zum Laden verwendet werden.

Sowohl die Ladeleiste 21 also auch der Stromabnehmer 22 können noch Hilfskontakte 23 bis 28 aufweisen, die nicht unbedingt beim Ein- und Ausfahren miteinander in Kontakt kommen müssen. Die Hilfskontakte 23 bis 25 der Ladeleiste 21 können daher kürzer ausgebildet sein als die stationären Kontakte 16, 17. Diese Hilfskontakte 23 bis 25 der Ladeleiste 21 befinden sich erst in einem Dauerkontakt mit den Hilfskontakten des Stromabnehmer 22, wenn das Beschickungsfahrzeug in der Übergabestation 10 steht.

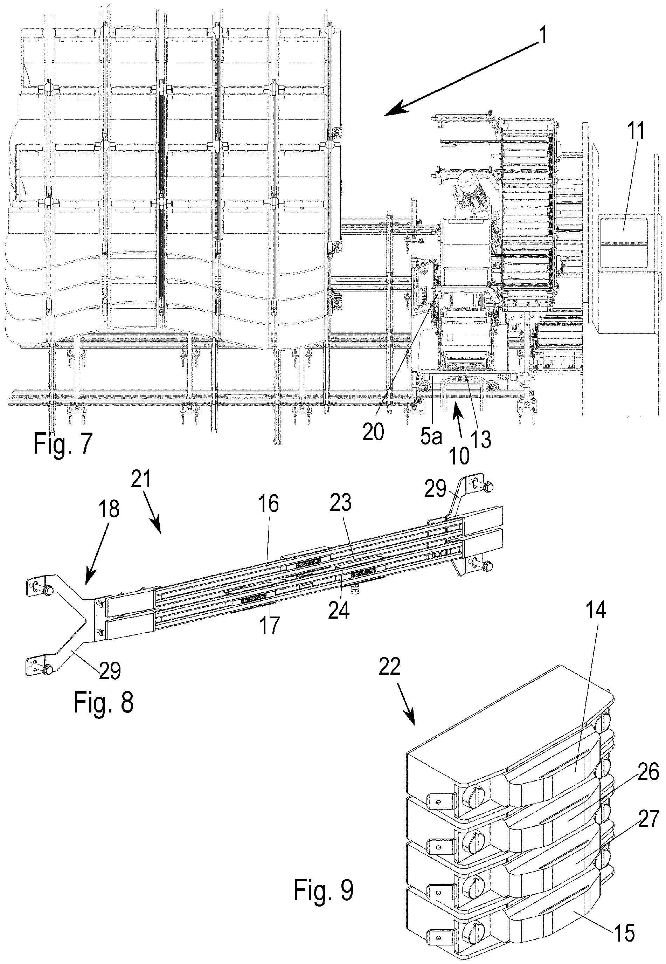

Fig. 7 bis 9 zeigen eine weitere Ausführungsform der Blocklageranordnung 1, bei der sich gegenüber der Ausführungsform nach den fig. 4 bis 6 die Ausbildung der Fahrzeugkontaktanordnung und der stationären Kontaktanordnung geändert hat.

Die Ladeleiste 21 ist wiederum länglich ausgebildet und weist eine Länge von mindestens einem Meter auf. Etwa die gleiche Länge haben auch die stationären Kontakte 16, 17 und die Hilfskontakte 23, 24, die dementsprechend bereits bei der Einfahrt des Beschickungsfahrzeugs 5a in die Übergabestation 10 in Kontakt mit den Kontakten 14, 15 und den Hilfskontakten 26, 27 des Stromabnehmers 22, also der Fahrzeugkontaktanordnung, kommen.

Die Druckkrafterzeugungseinrichtung 18 weist hier zwei Federbügel 29 auf, mit denen die Ladeleiste 21 an einer Wand der Übergabeeinrichtung 10 oder an einer in der Übergabeeinrichtung 10 angeordneten stationären Halterung befestigt ist.

Der Stromabnehmer 22 weist eine Länge auf, die etwas kleiner ist als die Länge der Ladeleiste 21, beispielsweise die Hälfte der Länge der Ladeleiste 21.

## Patentansprüche

1. Blocklageranordnung (1) mit mehreren Behälterstapelräumen (2), einem unterhalb der Behälterstapelräume (2) angeordneten Beschickungsraum (4), mindestens einem im Beschickungsraum (4) verfahrbaren Beschickungsfahrzeug (5, 5a), mit dem Behälter (3, 3a) von unten in einen Behälterstapelraum (2) einlagerbar und von unten aus dem Behälterstapelraum (2) entnehmbar sind und das eine elektrische Antriebsanordnung und eine elektrische aufladbare Batterie (12) aufweist, und mindestens einer Übergabestation (10), **dadurch gekennzeichnet, dass** in der Übergabestation (10) eine elektrische Ladeeinrichtung (13) für die Batterie (12) angeordnet ist.

2. Blocklageranordnung nach Anspruch 1, **dadurch gekennzeichnet, dass** die Ladeeinrichtung (13) eine stationäre Kontaktanordnung (16, 17) aufweist, mit der eine Fahrzeugkontaktanordnung (14, 15) beim Einfahren in die Übergabestation (10) in Kontakt kommt.

3. Blocklageranordnung nach Anspruch 2, **dadurch gekennzeichnet, dass** mindestens eine der Kontaktanordnungen (14, 15; 16, 17) eine Druckkrafterzeugungseinrichtung (18, 19) aufweist, die in Richtung auf die andere Kontaktanordnung wirkt (16, 17; 14, 15), wenn sich das Beschickungsfahrzeug (5a) in der Übergabestation (10) befindet.

4. Blocklageranordnung nach einem der Ansprüche 1 bis 3, **dadurch gekennzeichnet, dass** die Ladeeinrichtung (13) auf einen Ladestrom mit einer Stromstärke von mindestens 80 Ampere ausgelegt ist, vorzugsweise im Bereich von 80 bis 140 Ampere.

5. Blocklageranordnung nach einem der Ansprüche 1 bis 4, **dadurch gekennzeichnet, dass** die Ladeeinrichtung (13) auf die Batterie (12) abgestimmt ist und die Batterie (12) mit einer C-Rate von mindestens 10 lädt.

6. Blocklageranordnung nach einem der Ansprüche 1 bis 5, **dadurch gekennzeichnet, dass** die Ladeeinrichtung (13) die Batterie (12) mindestens mit einer Energiemenge lädt, die das Beschickungsfahrzeug (5, 5a) durchschnittlich in einem Arbeitszyklus zwischen zwei Aufenthalten in der Übergabestation (10) verbraucht.

7. Blocklageranordnung nach einem der Ansprüche 1 bis 6, **dadurch gekennzeichnet, dass** das Beschickungsfahrzeug (5) eine Hubeinrichtung (8) aufweist, die mit einem elektrischen Antrieb in Wirkverbindung steht, wobei der elektrische Antrieb bei einem Absenken der Hubeinrichtung (8) als elektrischer Generator arbeitet und elektrische Energie in die Batterie (12) einspeist.

8. Blocklageranordnung nach einem der Ansprüche 1 bis 7, **dadurch gekennzeichnet, dass** die Batterie (12) eine Lithium-Titan-Oxid-Batterie ist

9. Verfahren zum Betreiben einer Blocklageranordnung (1) mit mehreren Behälterstapelräumen (2) und einem unterhalb der Behälterstapelräume (2) angeordneten Beschickungsraum (4), bei dem man Behälter (3, 3a) mit Hilfe eines im Beschickungsraum (4) bewegbaren Beschickungsfahrzeugs (5, 5a) von unten in die Behälterstapelräume (2) einlagert und nach unten aus den Behälterstapelräumen (2) entnimmt, das Beschickungsfahrzeug (5, 5a) elektrisch über eine im Beschickungsfahrzeug (5a) mitgeführte aufladbare Batterie (12) antreibt und das Beschickungsfahrzeug (5a) in eine Übergabestation (10) bewegt, **dadurch gekennzeichnet, dass** man die Batterie (12) lädt, während sich das Beschickungsfahrzeug (5a) in der Übergabestation (10) befindet.

10. Verfahren nach Anspruch 9, **dadurch gekennzeichnet, dass** das Beschickungsfahrzeug (5a) beim Einfahren in die Übergabestation (10) einen Kontakt zwischen der Batterie (12) und einer Ladeeinrichtung (13) automatisch herstellt.

11. Verfahren nach Anspruch 9 oder 10, **dadurch gekennzeichnet, dass** man die Batterie (12) mit einer C-Rate von mindestens 10 lädt.

12. Verfahren nach einem der Ansprüche 9 bis 11, **dadurch gekennzeichnet, dass** man der Batterie (12) beim Aufenthalt in der Übergabestation (10) eine Energiemenge zuführt, die mindestens der Energiemenge entspricht, die das Beschickungsfahrzeug (5, 5a) in einem durchschnittlichen Arbeitszyklus zwischen zwei Aufenthalten in der Übergabestation (10) verbraucht.

13. Verfahren nach einem der Ansprüche 9 bis 12, **dadurch gekennzeichnet, dass** man ein Beschickungsfahrzeug (5) mit einer Hubeinrichtung (8) verwendet, die mit einem elektrischen Antrieb in Wirkverbindung steht, wobei man den elektrischen Antrieb beim Absenken der Hubeinrichtung (8) generatorisch betreibt.

14. Verfahren nach einem der Ansprüche 9 bis 13, **dadurch gekennzeichnet, dass** man als Batterie (12) eine Lithium-Titan-Oxid-Batterie verwendet.

## Claims

1. A block storage arrangement (1) having multiple container stacking compartments (2), a loading compartment (4) arranged below the container stacking compartments (2), at least one loading vehicle (5, 5a) which is movable in the loading compartment (4) and with which containers (3, 3a) can be stored from below in a container stacking compartment (2) and can be removed from below from the container stacking compartment (2), and which has an electric drive assembly and an electrically rechargeable battery (12), and at least one transfer station (10), **characterized in that** an electrical charging device (13) for the battery (12) is arranged in the transfer station (10).

2. The block storage arrangement according to Claim 1, **characterized in that** the charging device (13) has a stationary contact arrangement (16,17) with which a vehicle contact arrangement (14,15) comes into contact when driving into the transfer station (10).

3. The block storage arrangement according to Claim 2, **characterized in that** at least one of the contact arrangements (14, 15; 16, 17) has a compressive force generation device (18, 19), which acts in the direction of the other contact arrangement (16, 17; 14, 15) when the loading vehicle (5a) is located in the transfer station (10).

4. The block storage arrangement according to any of Claims 1 to 3, **characterized in that** the charging device (13) is designed for a charging current having a current intensity of at least 80 amperes, preferably in the range of 80 to 140 amperes.

5. The block storage arrangement according to any of Claims 1 to 4, **characterized in that** the charging device (13) is adapted to the battery (12) and charges the battery (12) at a C-rate of at least 10.

6. The block storage arrangement according to any of Claims 1 to 5, **characterized in that** the charging device (13) charges the battery (12) at least with an amount of energy that the loading vehicle (5, 5a) consumes on average in a working cycle between two stays in the transfer station (10).

7. The block storage arrangement according to any of Claims 1 to 6, **characterized in that** the loading vehicle (5) has a lifting device (8) which is operatively connected to an electric drive, wherein the electric drive operates as an electric generator and feeds electrical energy into the battery (12) when the lifting device (8) is lowered.

8. The block storage arrangement according to any of Claims 1 to 7, **characterized in that** the battery (12) is a lithium-titanium-oxide battery.

9. A method for operating a block storage arrangement (1) having multiple container stacking compartments (2), a loading compartment (4) arranged below the container stacking compartments (2), in which method, with the aid of a loading vehicle (5, 5a) movable in the loading compartment (4), containers (3, 3a) are stored from below in the container stacking compartments (2) and are removed downward from the container stacking compartments (2), the loading vehicle (5, 5a) is electrically driven via a rechargeable battery (12) which is carried along in the loading vehicle (5a), and the loading vehicle (5a) is moved into a transfer station (10), **characterized in that** the battery (12) is charged while the loading vehicle (5a) is located in the transfer station (10).

10. The method according to Claim 9, **characterized in that** when driving into the transfer station (10), the loading vehicle (5a) automatically establishes contact between the battery (12) and a charging device (13).

11. The method according to Claim 9 or 10, **characterized in that** the battery (12) is charged at a C-rate of at least 10.

12. The method according to any of Claims 9 to 11, **characterized in that**, during a stay in the transfer station (10), the battery (12) is supplied with an amount of energy which corresponds to at least the amount of energy which the loading vehicle (5, 5a) consumes in an average working cycle between two stays in the transfer station (10).

13. The method according to any of Claims 9 to 12, **characterized in that** a loading vehicle (5) with a lifting device (8) which is operatively connected to an electric drive is used, wherein the electric drive is operated as a generator when the lifting device (8) is lowered.

14. The method according to any of Claims 9 to 13, **characterized in that** the battery (12) used is a lithium-titanium-oxide battery.

## Revendications

1. Agencement d'entreposage en blocs (1) avec plusieurs espaces d'empilage de conteneurs (2), un espace de chargement (4) disposé en dessous des espaces d'empilage de conteneurs (2), au moins un véhicule de chargement (5, 5a)) déplaçable dans l'espace de chargement (4), avec lequel des conteneurs (3, 3a) peuvent être entreposés depuis le bas dans un espace d'empilage de conteneurs (2) et prélevés depuis le bas de l'espace d'empilage de conteneurs (2) et qui comporte un système d'entraînement électrique et une batterie électrique rechargeable (12) et au moins un poste de transfert (10), ***caractérisé en ce qu***'un système de charge électrique (13) pour la batterie (12) est disposé dans le poste de transfert (10).

2. Agencement d'entreposage en blocs selon la revendication 1, ***caractérisé en ce que*** le système de charge (13) comporte un agencement de contact fixe (16, 17) avec lequel un système de contact de véhicule (14, 15) vient en contact lors de l'entrée dans le poste de transfert (10).

3. Agencement d'entreposage en blocs selon la revendication 2, ***caractérisé en ce qu***'au moins un des agencements de contact (14, 15, 16, 17) comporte un dispositif de production de force de pression (18, 19), qui agit en direction de l'autre agencement de contact (16, 17, 14, 15), lorsque le véhicule de chargement (5a) se trouve dans le poste de transfert (10).

4. Agencement d'entreposage en blocs selon l'une quelconque des revendications 1 à 3, ***caractérisé en ce que*** le système de charge (13) est conçu sur un courant de charge avec une intensité de courant d'au moins 80 ampères, de préférence dans une plage de 80 à 140 ampères.

5. Agencement d'entreposage en blocs selon l'une quelconque des revendications 1 à 4, ***caractérisé en ce que*** le système de charge (13) est accordé sur la batterie (12) et charge la batterie (12) avec une capacité de charge C d'au moins 10.

6. Agencement d'entreposage en blocs selon l'une quelconque des revendications 1 à 5, ***caractérisé en ce que*** le système de charge (13) charge la batterie (12) au moins avec une quantité d'énergie, que le véhicule de chargement (5, 5a) consomme en moyenne dans un cycle de travail entre deux séjours dans le poste de transfert (10) .

7. Agencement d'entreposage en blocs selon l'une quelconque des revendications 1 à 6, ***caractérisé en ce que*** le véhicule de chargement (5) comporte un système de levage (8), qui est en liaison fonctionnelle avec un système d'entraînement électrique, sachant que le système d'entraînement électrique fonctionne comme un générateur électrique lors d'une descente du système de levage (8) et alimente en énergie électrique la batterie (12) .

8. Agencement d'entreposage en blocs selon l'une quelconque des revendications 1 à 7, **caractérisé en ce que** la batterie (12) est une batterie d'oxyde lithium-titane.

9. Procédé de fonctionnement d'un agencement d'entreposage en blocs (1) avec plusieurs espaces d'empilage de conteneurs (2) et un espace de chargement (4) disposé en dessous des espaces d'empilage de conteneurs (2), pour lequel on entrepose des conteneurs (3, 3a) depuis le bas dans les espaces d'empilage de conteneurs (2) à l'aide d'un véhicule de chargement (5, 5a) déplaçable dans l'espace de chargement (4) et on les prélève vers le bas depuis les espaces d'empilage de conteneurs (2), le véhicule de chargement (5, 5a) est entraîné électriquement par une batterie (12) chargeable embarquée dans le véhicule de chargement (5a) et le véhicule de chargement (5a) est déplacé dans un poste de transfert (10), ***caractérisé* en ce que** l'on charge la batterie (12), pendant que le véhicule de chargement (5a) se trouve dans le poste de transfert (10).

10. Procédé selon la revendication 9, ***caractérisé en ce que*** le véhicule de chargement (5a) établit automatiquement un contact entre la batterie (12) et un système de charge (13) lors de l'entrée dans le poste de transfert (10) .

11. Procédé selon la revendication 9 ou 10, ***caractérisé en ce que*** l'on charge la batterie (12) avec une capacité de charge C d'au moins 10.

12. Procédé selon l'une quelconque des revendications 9 à 11, ***caractérisé en ce que*** l'on fournit une quantité d'énergie à la batterie (12) lors du séjour dans le poste de transfert (10), qui correspond au moins à la quantité d'énergie, que le véhicule de chargement (5, 5a) consomme dans un cycle de travail moyen entre deux séjours dans le poste de transfert (10).

13. Procédé selon l'une quelconque des revendications 9 à *12,* ***caractérisé en ce que*** l'on utilise un véhicule de chargement (5) avec un système de levage (8), qui est en liaison fonctionnelle avec un système d'entraînement électrique, sachant que l'on fait fonctionner le système d'entraînement électrique avec un générateur lors de la descente du système de levage (8).

14. Procédé selon l'une quelconque des revendications 9 à 13, ***caractérisé en ce que*** l'on utilise une batterie à l'oxyde de lithium-titane en tant que batterie (12).
